**Europäisches Patentamt**

**European Patent Office**

**Office européen des brevets**

(19)

(11) Veröffentlichungsnummer: **0 096 859**

**B1**

(12) **EUROPÄISCHE PATENTSCHRIFT**

(45) Veröffentlichungstag der Patentschrift:
10.08.88

(51) Int. Cl.⁴: **B 60 N 1/06**

(21) Anmeldenummer: **83105680.9**

(22) Anmeldetag: **10.06.83**

(54) **Rückenlehne für Fahrzeugsitze.**

(30) Priorität: **16.06.82 DE 3222505**

(43) Veröffentlichungstag der Anmeldung:
**28.12.83 Patentblatt 83/52**

(45) Bekanntmachung des Hinweises auf die Patenterteilung:
**10.08.88 Patentblatt 88/32**

(84) Benannte Vertragsstaaten:
**FR GB IT**

(56) Entgegenhaltungen:
**FR-A-2 129 678**
**FR-A-2 515 946**
**US-A-3 043 624**

(73) Patentinhaber: **KEIPER RECARO GmbH & Co.,**
**Büchelstrasse 54- 58, D-5630 Remscheid 14 (DE)**

(72) Erfinder: **Resag, Jörg, Dipl. Ing. (FH), Dahlienweg**
**1, D-7024 Filderstadt 4 (DE)**
Erfinder: **Schmale, Gerhard, Jung- Stilling- Strasse**
**68, D-5609 Hückeswagen (DE)**

(74) Vertreter: **Patentanwälte Phys. Bartels Dipl.- Ing.**
**Fink Dr.- Ing. Held, Lange Strasse 51, D-7000**
**Stuttgart 1 (DE)**

LIBER, STOCKHOLM 1988

## Beschreibung

Die Erfindung betrifft eine Rückenlehne für Fahrzeugsitze, insbesondere Kraftfahrzeugsitze, welche die Merkmale des Oberbegriffs des Anspruches 1 aufweist.

Bei den bekannten Rückenlehnen dieser Art besteht der Jochteil wie die Seitenholme aus Stahlblech und ist mit den Seitenholmen verschweißt. Die hierdurch vorhandene starre Verbindung zwischen den Enden des Jochteils und dem oberen Ende der beiden Seitenholme hat zur Folge, daß bei einer Durchbiegung des Jochteils infolge einer starken, in Sitzlängsrichtung wirkenden Belastung die Seitenholme eine Verwindung erfahren, was ihre Belastbarkeit in Schwenkrichtung der Rückenlehne erheblich vermindern kann.

Da man eine solche Verminderung der Belastbarkeit der Seitenholme aus Sicherheitsgründen soweit wie möglich vermeiden muß, ist bereits vorgeschlagen worden, das Jochteil durch ein Federstahlband zu ersetzen, das von hinten her die Seitenholme umgreift und nur an deren Außenseite befestigt ist. Bei einer starken Belastung der Rückenlehne von vorne her, wie sie beispielsweise bei einem Unfall auftreten kann, sind hier die Seitenholme nur einer Biegebeanspruchung, nicht aber einer Torsionsbeanspruchung ausgesetzt. Es genügt daher, die Seitenholme für die auftretenden Biegebeanspruchuungen ausreichend steif zu machen, was mit einem wesentlich geringerem Aufwand, Gewicht und Platzbedarf im Vergleich zu solchen Seitenholmen möglich ist, welche eine Torsion erfahren und auch im tordierten Zustand noch die volle Belastbarkeit haben müssen. Diesem Vorteil steht jedoch ein Nachteil gegenüber, welcher vor allem dann zu erheblichen Problemen führt, wenn der Sitz in ein Fahrzeug eingebaut ist, in dem in Sitzlängsrichtung relativ wenig Raum zur Verfügung steht. Bei einer Belastung der Rückenlehne von vorne her wölbt sich nämlich das Federstahlband unter Umständen so weit nach hinten aus, daß eine sich hinter dieser Rückenlehne befindende Person dadurch gefährden oder gar verletzt wird. Sind an dem Federstahlband die Tragstangen einer Kopfstütze befestigt, dann können bei einer Auswölbung des Bandes außerdem diese Tragstangen oder ihre Halterung in der Kopfstütze deformiert werden. Ein weiterer Nachteil besteht darin, daß die Seitenholme bei einer Auswölbung des Federstahlbandes ihren Abstand voneinander verringern, wodurch auf den Sitzbenutzer ein seitlicher Druck ausgeübt werden kann.

Der Erfindung liegt die Aufgabe zugrunde, eine Rückenlehne der eingangs genannten Art zu schaffen, bei welcher nicht nur die Seitenholme selbst bei einer starken Belastung der Rückenlehne von vorne her keine Torsion erfahren oder sich nähern, sondern auch das Jochteil zumindest keine nennenswerte Auswölbung nach hinten erfährt und deshalb die Rückenlehne auch für Fahrzeuge mit einem geringen Platzangebot in Sitzlängsrichtung geeignet ist. Diese Aufgabe löst eine Rückenlehne mit den Merkmalen des Anspruches 1.

Der biegesteife und knicksteife Abstandhalter verhindert, daß bei einer starken Belastung der Rückenlehne von vorne die Seitenholme sich nähern und vermeidet, da er verbindungslos an den Seitenholmen anliegt, eine Torsionsbeanspruchung der Seitenholme. Eine Torsionsbeanspruchung kann auch vom Querteil nicht auf die Seitenholme ausgeübt werden. Die Seitenholme brauchen daher nur eine Biegebeanspruchung in der Schwenkrichtung der Rückenlehne aufzunehmen. Durch die erfindungsgemäße Lösung wird auch eine Auswölbung der Rückenlehne nach hinten bei einer Belastung von vorne her zumindest weitgehend unterdrückt, weil der Abstandhalter biege- und knicksteif ist, sich also nicht nach hinten durchbiegt, und das Querteil an einer nennenswerten Durchbiegung nach hinten dadurch gehindert wird, daß die Seitenholme dank des als Abstandhalter dienenden Jochteils und der fehlenden Torsionsbeanspruchung ihren Abstand voneinander beibehalten. Vorteilhaft ist ferner dann, wenn der Abstandhalter als Träger für eine Kopfstütze dient, daß die Belastung der Rückenlehne von vorne oder von hinten nicht zu einer Beanspruchung der Kopfstütze führt.

Vorzugsweise ist der Abstandhalter gemäß Anspruch 2 ausgebildet, da er dann gleichzeitig als Träger für eine Kopfstütze und/oder eine Schulterstütze dienen kann.

Der Querteil könnte ein bügelartiger, formstabiler Körper sein, ist jedoch im Hinblick auf Gewicht und Kosten vorzugsweise ein biegeweiches Blech, da dieses die Aufgaben des Querteils ebenfalls erfüllen kann und sogar insofern vorteilhafter als ein formstabiler Körper ist, als es sich im Bereich seiner Endabschnitte auf den für die torsionsfreie Belastung der Seitenholme erforderlichen Winkel einstellen kann. Dabei bilden die Zonen, in denen das Blech eine Umlenkung durch die Endabschnitte des Abstandhalters und die Seitenholme erfährt, scharnierartig wirkende Bereiche.

Da keine starre Verbindung zwischen dem Querteil und den Seitenholmen vorhanden ist, vielmehr letztere sich nur am Abstandhalter abstützen, kann der Abstandhalter aus Kunststoff bestehen. Dies ist auch insofern vorteilhaft, als dann die für eine 5 Kopfstütze und/oder eine Schulterstütze oder auch für die Betätigung einer Entriegelungseinrichtung erforderlichen Halterungen angeformt sein können und damit keinen zusätzlichen Aufwand verursachen.

Um Kräfte, die von oben her auf den Abstandhalter einwirken, in einfacher Weise auf die Seitenholme übertragen zu können, liegt bei einer bevorzugten Ausführungsform der Abstandhalter auf der Oberkante des den Querteil bildenden Bleches auf. In dieser Richtung hat dieses mit den Seitenholmen beispielsweise punktverschweißte Blech eine hohe Belastbarkeit. Eine Fixierung der Lage des Abstandhalters bezüglich des Bleches ist beispielsweise mit den im Anspruch 6 genannten Mitteln möglich.

Bei einer bevorzugten Ausführungsform sind die Seitenholme und der Abstandhalter gemäß Anspruch 7 ausgebildet und angeordnet. Hierdurch erreicht man bei einer sowohl fertigungstechnisch als auch hinsichtlich des Gewichtes vorteilhaften Profilform der Seitenholme eine zuverlässige Positionierung des Abstandhalters in besonders einfacher Weise. Hierzu tragen auch die Ausgestaltungen gemäß den Ansprüchen 8 und 9 bei.

Das den Querteil bildende, biegeweiche Blech kann sich über den unteren Rand des Abstandhalters hinaus erstrecken und zusammen mit den Seitenholmen einen schalenartigen Polsterträger bilden.

Im folgenden ist die Erfindung anhand eines in der Zeichnung dargestellten Ausführungsbeispiels im einzelnen erläutert. Es zeigen:

Fig. 1 eine Seitenansicht des Ausführungsbeispiels,

Fig. 2 eine unvollständige Ansicht von vorne des Ausführungsbeispiels ohne Polsterung,

Fig. 3 einen Schnitt nach der Linie III-III der Fig. 2,

Fig. 4 einen Schnitt nach der Linie IV-IV der Fig. 2,

Fig. 5 einen Schnitt nach der Linie V-V der Fig. 2,

Fig. 6 einen Schnitt nach der Linie VI-VI der Fig. 2.

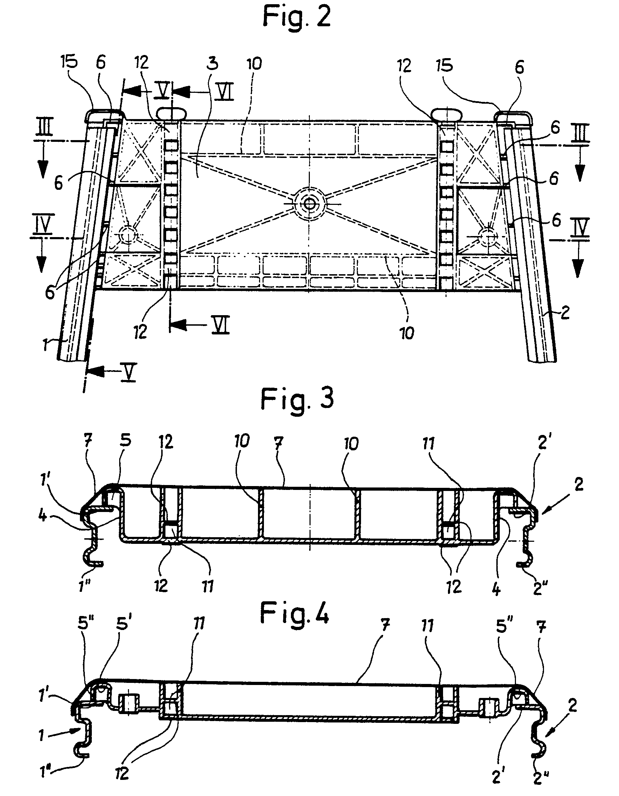

Eine Rückenlehne für einen Kraftfahrzeugsitz weist zwei bezüglich der Lehnenmitte spiegelbildlich gleich ausgebildete Seitenholme 1 und 2 auf, welche im Bereich ihres unteren Endes mittels je eines schematisch dargestellten, bekannten Gelenkbeschlages schwenkbar und in wählbarer Schwenkstellung feststellbar mit dem Polsterträger des zugehörigen Sitzteils verbunden sind. Die aus Stahlblech bestehenden Seitenholme 1 und 2 haben ein C-artiges Querschnittsprofil, wie die Fig. 3 und 4 zeigen, wobei die beiden Schenkel 1' und 1'' bzw. 2' und 2'' parallel zueinander verlaufen und gegen den anderen Seitenholm weisen. Der im Verhältnis zur Länge der Schenkel verhaltnismäßig breite Jochteil des Profils ist durch eine nach innen gedrückte, breite Sicke versteift. Die Seitenholme 1 und 2 haben daher eine hohe Biegesteifigkeit in ihrer Schwenkrichtung und eine geringere Steifigkeit gegenüber einer Biegung gegen den anderen Seitenholm hin.

Zwischen den beiden Seitenholmen 1 und 2, deren Abstand voneinander gegen ihr oberes Ende hin abnimmt, wie Fig. 2 zeigt, ist im Bereich des oberen Endes ein biege- und knicksteifer Abstandhalter 3 angeordnet, der von hinten her zwischen die Seitenholme eingesetzt ist und bei dem es sich um einen Kunststoffspritzteil handelt. Die Neigung der Seitenfläche 4 des Abstandhalters 3 ist an die Neigung der Seitenholme 1 und 2 angepaßt. Der Abstandhalter 3 kann deshalb nicht nach oben aus seiner Lage zwischen den Seitenholmen 1 und 2 herausbewegt werden, obwohl er mit den Seitenholmen nicht mittels Schrauben oder anderer Verbindungselemente verbunden ist.

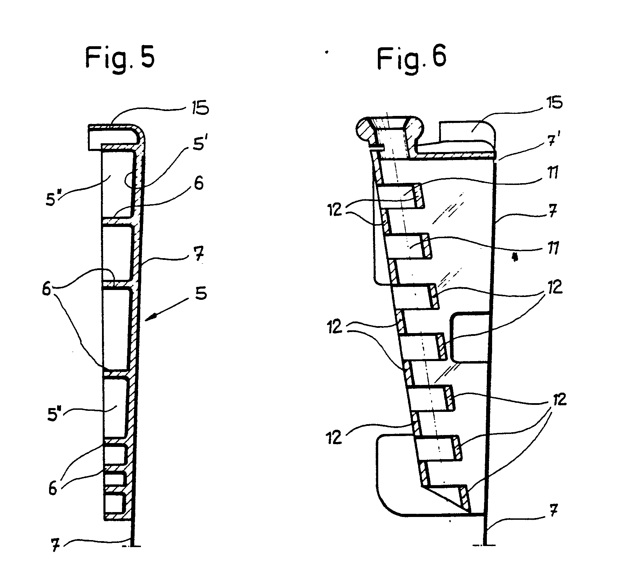

Über die beiden Seitenflächen 4 steht je eine einstückig mit dem Abstandhalter 3 ausgebildete Leiste 5 über. Diese Leisten 5 sind aus fertigungstechnischen Gründen zur Vorderseite hin offen und durch Querstege 6 versteift. Diese spiegelbildlich gleich ausgebildeten Leisten 5, deren hintere Begrenzungswand 5' in der durch die hintere Begrenzungswand des Abstandhalters 3 definierten Fläche liegt, werden gegen ihr unteres Ende hin dünner. Die Höhe der Seitenwand 5'' nimmt daher nach unten ab, wie Fig. 5 zeigt.

Die Seitenwand 5'' der Leisten 5 liegt mit ihrer nach vorne weisenden Fläche an der nach hinten weisenden Seite des hinteren Schenkels 1' bzw. 2' der beiden Seitenholme an. Soweit diese beiden Schenkel in den Bereich der Querstege 6 ragen, liegen auch diese Querstege an den Schenkeln 1' und 2' an. Der Abstandhalter 3 einschließlich der Leisten 5 steht also nach hinten über die Seitenholme 1 und 2 über, und zwar entsprechend der Dicke der Leisten 5. Wie insbesondere die Fig. 3 und 4 zeigen, liegt an der Rückseite des Abstandhalters 3 ein dünnes, biegeweiches Blech 7 an, das im Ausführungsbeispiel eine Dicke von etwa 0,4 mm hat. Das Blech 7 ist über die Leisten 5 hinaus bis zu den Seitenholmen 1 und 2 geführt. Der Überstand der Leisten 5 nach hinten über die Seitenholme 1 und 2 sowie das Maß, um das die Leisten 5 gegenüber den Seitenholmen 1 und 2 zur Lehnenmitte hin versetzt sind, ihr Abstand voneinander also kleiner ist als der Abstand der Seitenholme voneinander, sind so gewählt, daß das Blech 7 in den beiden sich von den Leisten 5 zum benachbarten Seitenholm 1 bzw. 2 erstreckenden Abschnitten mit der Längsmittelebene der Lehne je einen spitzen Winkel einschließt, der die für eine torsionsfreie Beanspruchung der Seitenholme 1, 2 erforderliche Größe hat. Dabei bilden die eine Umlenkung durch die Leisten 5 und die Seitenholme 1, 2 erfahrenden Zonen des Bleches 7 scharnierartige Bereiche, welche eine gegebenenfalls erforderliche Einstellung des Bleches 7 auf die richtige Winkelgröße ermöglichen.

Das Blech 7 liegt an den Seitenholmen 1, 2, und zwar an deren Kante am Übergang vom Jochabschnitt zum Schenkel 1' bzw. 2'', an und ist mit dem Jochabschnitt im Bereich zwischen diesem Schenkel und der Sicke punktverschweißt oder in anderer Weise fest verbunden Hierdurch wird in Verbindung mit der Verjüngung der Leisten 5 nach unten erreicht, daß der Abstandhalter 3 bei einer Bewegung nach unten relativ zu den beiden Seitenholmen sich zwischen diesen und dem Blech 7 verkeilen würde. Vor allem, aber bezweckt diese Konstruktion, daß auch bei hohen Belastungen der Rückenlehne von vorne her die Seitenholme 1 und 2 keiner Torsionsbeanspruchung, sondern nur einer Biegebeanspruchung ausgesetzt sind, wobei der Abstandhalter 3 verhindert, daß sich der Abstand zwischen den beiden Seitenholmen verringert, diese also gegeneinander gebogen werden. Hierdurch wird erreicht, daß das Blech 7 selbst bei einer hohen Belastung von vorne her sich nicht wesentlich nach hinten auswölbt.

Der Abstandhalter 3 ist auf seiner Rückseite nahe seinem oberen Rand mit einer nach hinten vorspringenden und sich über die gesamte Breite erstreckenden Stufe 7' versehen, welche auf dem oberen Rand des Bleches 7 aufliegt. Der Abstandhalter 3 stützt sich daher bei einer Belastung von oben her auf dem Blech 7 ab. Zusätzlich sichern Schrauben 8, welche das Blech 7 durchdringen und in den Abstandhalter 3 eingedreht sind, letzteren gegenüber eine Verschiebung nach unten. Außerdem halten die Schrauben 8 das Blech 7 in Anlage an der Rückseite des Abstandhalters 3. Es wäre aber auch möglich, das Blech 7 längs seines oberen Randes im Bereich des Abstandhalters nach vorne abzukanten und diesen nach vorne weisenden Randstreifen in den Abstandhalter eingreifen zu lassen. Eine andere Möglichkeit bestünde darin, in der den oberen Rand des Bleches 7 übergreifenden Stufe eine Nut vorzusehen, welche den oberen Rand aufnimmt. In beiden Fällen wäre zusätzlich zu der durch die Spannung des Bleches 7 bedingten Anlage an der Rückseite des Abstandhalters sichergestellt, daß der obere Rand des Bleches 7 stets vom Abstandhalter überdeckt ist, auch wenn die am Abstandhalter vorgesehene Stufe sehr schmal ist, was aus Sicherheitsgründen erwünscht ist.

An das obere Ende beider Leisten 5 ist eine Kappe 15 angeformt, welche das obere Ende der Seitenholme 1 bzw. 2 abdeckt, so daß die Seitenholme nach oben offen sein können.

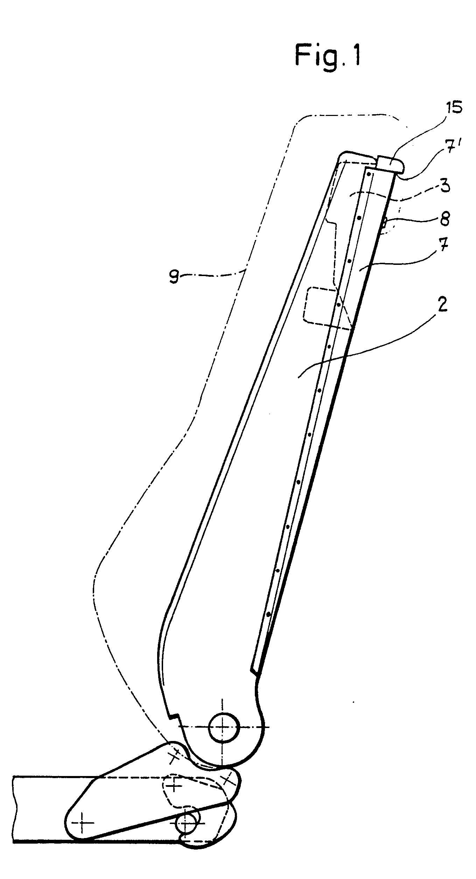

Das Blech 7 erstreckt sich nach unten bis in die Nähe desjenigen Bereichs der Seitenholme 1 und 2, in dem diese den Gelenkbeschlag tragen. Hierdurch bildet das Blech 7 zusammen mit den Seitenholmen 1 und 2 sowie dem Abstandhalter 3 einen schalenartigen Polsterträger für das in Fig. 1 mit strichpunktierter Linie dargestellte Polster 9 Selbstverständlich kann dann, wenn, wie in Fig. 1 angedeutet, das Polster 9 im Lendenund Hüftbereich nach vorne gezogen ist, an den Seitenholmen je ein Seitenwangenrahmen oder dergleichen befestigt sein.

Der Abstandhalter 3 weist nicht nur Versteifungsrippen 10 auf, welche die dem Rücken des Sitzbenutzers zugekehrte, im wesentlichen rechteckförmige Vorderseite versteifen. Wie insbesondere die Fig. 2 bis 4 zeigen, ist der Abstandhalter 3 auch mit zwei parallel zueinander verlaufenden, von oben nach unten durchgehenden Führungskanälen 11 versehen, in welche die Tragstangen einer Kopfstütze eingesteckt werden können. Die Führungskanäle 11 haben einen quadratischen Querschnitt, wobei die Seitenlänge gleich dem Durchmesser der üblicherweise runden Tragstangen gewählt ist, damit diese praktisch spielfrei in den Führungskanälen 11 liegen. Nach hinten und vorne sind die Führungskanäle 11 durch Stege 12 begrenzt, die in Kanallängsrichtung in Abständen voneinander liegen, die gleich der Stegbreite sind. Dabei sind die Stege der Vorderseite auf die Lücken zwischen den Stegen der Rückseite und umgekehrt ausgerichtet. Durch diese Ausbildung der Führungskanäle 11 können die Tragstangen relativ große Toleranzen haben. Die Festlegung der Tragstangen in der gewünschten Höhe erfolgt in bekannter Weise mittels je einer Schenkelfeder, welche in die Rasten der Tragstangen einrasten kann und auf der Oberseite des Abstandhalters 3 aufliegt.

Statt der Führungskanäle 11 könnte der Abstandhalter 3 eine Lagerung für eine Schulterstütze aufweisen, in der dann entsprechende Führungskanäle für die Tragstangen einer Kopfstütze vorzusehen wären. Ferner können im Abstandhalter die Betätigungselemente vorgesehen sein, welche bei einer Rückenlehne, welche nach vorne geklappt werden kann, zum Lösen der ein solches Klappen verhindernden Verriegelungseinrichtung notwendig sind.

## Patentansprüche

1. Rückenlehne für Fahrzeugsitze, insbesondere Kraftfahrzeugsitze, deren Polsterträger Seitenholme (1, 2) die je als Profilschiene ausgebildet sind, sowie einen sich im Bereich des oberen Endes der Seitenholme vom einen Seitenholm zum anderen erstreckenden Jochtei (3) aufweist, dadurch gekennzeichnet, daß der Jochteil (3) als biege- und knicksteifer, verbindungslos an den Seitenholmen (1, 2) anliegender und zumindest im Bereich seiner an den Seitenholmen anliegenden Endabschnitte über die Seitenholme nach hinten überstehender Abstandhalter (3) ausgebildet ist, und daß an der nach außen weisenden Seite beider Seitenholme (1, 2) ein sie von hinten her übergreifender Querteil (7) befestigt ist, an dem die Rückseite des Jochteils (3) Anlage findet.

2. Rückenlehne nach Anspruch 1, dadurch gekennzeichnet, daß der Abstandhalter (3) in Höhe des oberen Endes der beiden Seitenholme (1,2) angeordnet ist und Mittel zur Festlegung einer Kopfstütze und/oder einer Schulterstütze aufweist.

3. Rückenlehne nach Anspruch 1 oder 2, dadurch gekennzeichnet, daß der Abstandhalter (3) aus Kunststoff besteht.

4. Rückenlehne nach einem der Ansprüche 1 bis 3, dadurcn gekennzeichnet, daß der Abstand der nach hinten über die Seitenholme (1, 2) überstehenden Endabschnitte (5) des Abstandhalters 13) voneinander kleiner ist als der Abstand der Seitenholme (1, 2) voneinander.

5. Rückenlehne nach einem der Ansprüche 1 bis 4, dadurch gekennzeichnet, daß der Querteil ein biegeweiches Blech (7) ist, dessen nach vorne gebogenen und an der Außenseite der Seitenholme (1, 2) befestigten Randzonen einen von den die Rückseite der Seitenholme (1,2) übergreifenden Endabschnitten des Abstandhalters (3) mitbestimmten Winkeln mit der Längsmittelebene des Sitzes einschließen.

6. Rückenlehne nach Anspruch 5, dadurch gekennzeichnet, daß die Winkel durch den Überstand der Endabschnitte (5) des Abstandhalters (3) über die Seitenholme (1, 2) nach hinten und ihre Versetzung zur Lehnenmitte hin gegenüber den Seitenholmen festgelegt sind.

7. Rückenlehne nach Anspruch 5 oder 6, dadurch gekennzeichnet, daß der Abstandhalter (3) auf der Oberkante des Bleches (7) aufliegt.

8. Rückenlehne nach einem der Ansprüche 5 bis 7, dadurch gekennzeichnet, daß der Abstandhalter (3) mit dem Blech (7) mittels dieses durchdringenden Verbindungselementen (8) verbunden ist.

9. Rückenlehne nach einem der Ansprüche 1 bis 8, dadurch gekennzeichnet, daß die Seitenholme (1, 2) ein C-artiges Querschnittsprofil haben, dessen Schenkel (1',1''; 2',2'') gegen den anderen Seitenholm weisen, und daß der Abstandhalter (3) an seinen beiden dem einen bzw. anderen Seitenholm (1, 2) zugewandten Enden mit je einem Vorsprung (Leiste 5) versehen ist, welcher einerseits am Querteil (7) und andererseits an der letzterem zugekehrten Außenseite des einen Schenkels (1', 2') des Seitenholms (1, 2) anliegt.

10. Rückenlehne nach Anspruch 9, dadurch gekennzeichnet, daß sich die beiden Vorsprünge (5) des Abstandhalters (3) in Längsrichtung der Seitenholme (1, 2) nach unten hin keilförmig verjüngen.

11. Rückenlehne nach einem der Ansprüche 1 bis 10, dadurch gekennzeichnet, daß die Seitenholme (1, 2) zumindest in demjenigen Bereich, in dem sich der Abstandhalter (3) befindet, einen zum oberen Ende hin abnehmenden Abstand voneinander haben.

12. Rückenlehne nach einem der Ansprüche 1 bis 11, dadurch gekennzeichnet, daß sich der Querteil (7) in Längsrichtung der Seitenholme (1, 2) über den unteren Rand des Abstandhalters (3) hinaus, vorzugsweise bis in den Bereich des unteren Endabschnitts der Seitenholme (1, 2), erstreckt.

## Claims

1. Back rest for vehicle seat, particularly motor vehicle seats, the upholstery support of which is provided with lateral beams (1, 2) which are constructed in each case as profile rails as well as a yoke section (3) extending in the area of the upper end of the lateral beams from one lateral beam to the other, characterised in that the yoke section (3) is constructed as a range spacer (3) which is resistant to bending and kinking, is located without connections at the lateral beams (1, 2) and which extends rearwards over the lateral beams at least in the area of its end sections located at the lateral beams and in that at the side of the two lateral beams (1, 2) facing outwards is attached a transverse section (7) which engages over it from the rear and with which the rear side of the yoke section (3) comes into contact.

2. Back rest according to claim 1, characterised in that the range spacer (3) is disposed at the height of the upper end of the two lateral sections (1, 2) and is provided with means for fixing a head rest and/or a shoulder support.

3. Back rest according to claim 1 or 2, characterised in that the range spacer (3) is made of plastic.

4. Back rest according to one of claims 1 to 3, characterised in that the distance of the end sections (5) of the range spacer (3) which extend rearwards over the lateral beams (1, 2) from each other is smaller than the distance of the lateral beams (1, 2) from each other.

5. Back rest according to one of claims 1 to 4, characterised in that the transverse section is a bendable piece of sheet metal (7) the edge zones of which, which are bent forwards and secured on the outside of the lateral beams (1, 2) include one of the angles which are determined at the same time as the end sections of the range spacer (3) which engage over the rear side of the lateral beams (1, 2) with the longitudinal middle plane of the seat.

6. Back rest according to claim 5, characterised in that the angles are fixed by the projection of the end sections (5) of the range spacer (3) over the side beams (1, 2) rearwards and their displacement towards the centre of the rest in relation to the lateral beams is also fixed.

7. Back rest according to claim 5 or 6 characterised in that the range spacer (3) is supported on the upper edge of the piece of sheet metal (7).

8. Back rest according to one of claims 5 to 7, characterised in that the range spacer (3) is connected to the piece of sheet metal (7) by means of connection components (8) which penetrate it.

9. Back rest according to one of claims 1 to 8, characterised in that the lateral beams (1, 2) have a C-type cross-sectional profile, the shanks (1', 1''; 2', 2'') of which are directed against the other lateral beam and in that the range spacer (3) is provided in each case with a protruding strip (5) at both its ends facing one or other of the lateral beams (1, 2'), this protruding strip abutting on one side on the transverse section (7) and on the other side on the final facing external side of one of the shanks (1', 2') of the lateral beam (1, 2).

10. Back rest according to claim 9, characterised in that the two protrusions (5) of the range spacer (3) are reduced downwards in a wedge formation in the longitudinal direction of the lateral beams (1, 2).

11. Back rest according to one of claims 1 to 10, characterised in that the lateral beams (1, 2) have a clearance from each other which is reduced towards the upper end at least in the area, in which the range spacer (3) is located.

12. Back rest according to one of claims 1 to 11, characterised in that the transverse section (7) extends in the longitudinal direction of the lateral beams (1, 2) over the lower edge of the range spacer (3) preferably into the area of the lower end section of the lateral beams (1, 2).

**Revendications**

1. Dossier pour sièges de véhicules, en particulier pour sièges de véhicules automobiles, dont le support de rembourrage présente des longerons latéraux (1, 2) qui sont chacun réalisé sous forme de rail profilé ainsi qu'une pièce de support (3) s'étendant dans la zone de l'extrémité supérieure des longerons latéraux, d'un longeron latéral à l'autre, caractérisé en ce que la pièce de support (3) est réalisée (sous la forme d'une entretoise (3) résistant à la flexion et au flambage, s'appuyant sans raccord sur les longerons latéraux (1, 2) et dépassant vers l'arrière des longerons latéraux au moins dans la zone de ses parties terminales s'appuyant sur les longerons latéraux, en ce qu'il est fixé sur le côté orienté vers l'extérieur des deux longerons latéraux (1, 2) , une pièce transversale (7) prenant ces derniers par l'arrière et sur laquelle prend appui le dos de la pièce de support (3).

2. Dossier selon la revendication 1, caractérisé en ce que l'entretoise (3) est placée à la hauteur de l'extrémité supérieure des deux longerons latéraux (1, 2) et présente des moyens de fixation d'un appui-tête et/ou d'un appui-épaules.

3. Dossier selon la revendication 1 ou 2, caractérisé en ce que l'entretoise (3) est en matière plastique.

4. Dossier selon l'une des revendications 1 à 3, caractérisé en ce que l'écartement des parties terminales (5) de l'entretoise (3) dépassant vers l'arrière des longerons latéraux (1, 2) est inférieur à l'écartement des longerons latéraux (1, 2).

5. Dossier selon l'une des revendications 1 à 4, caractérisé en ce que la pièce transversale est une tôle flexible (7) dont les bordures repliées vers l'avant et fixées sur le côté extérieur des longerons latéraux (1, 2) forment avec le plan médian longitudinal du siège un angle déterminé également par les parties terminales de l'entretoise (3) prenant l'arrière des longerons latéraux (1, 2).

6. Dossier selon la revendication 5, caractérisé en ce que l'angle est déterminé par le dépassement vers l'arrière des parties terminales (5) de l'entretoise (3) par rapport aux longerons latéraux (1, 2) et par leur décalage en direction du centre du dossier par rapport aux longerons latéraux.

7. Dossier selon la revendication 5 ou 6, caractérisé en ce que l'entretoise (3) repose sur le bord supérieur de la tôle (7).

8. Dossier selon l'une des revendications 5 à 7, caractérisé en ce que l'entretoise (3) est assemblée à la tôle (7) à l'aide d'éléments d'assemblage (8) traversant cette dernière.

9. Dossier selon l'une des revendications 1 à 8, caractérisé en ce que les longerons latéraux (1, 2) ont un profil de section transversale en C dont les ailes (1', 1'' ; 2', 2'' ) sont orientées vers l'autre longeron latéral et en ce que l'entretoise (3) est munie sur chacune de ses deux extrémités tournées vers l'un et l'autre des longerons latéraux (1, 2) d'une saillie (baguette 5) qui s'appuie d'une part sur la pièce transversale (7) et d'autre part sur le côté extérieur tourné vers cette dernière de l'une des ailes (1', 2') du longeron latéral (1, 2).

10. Dossier selon la revendication 9, caractérisé en ce que les deux saillies (5) de l'entretoise (5) diminuent vers le bas en forme de coin dans la direction longitudinale des longerons latéraux (1, 2).

11. Dossier selon l'une des revendications 1 à 10, caractérisé en ce que les longerons latéraux (1, 2) présentent, au moins dans la zone dans laquelle se trouve l'entretoise (3), un écartement allant en diminuant vers l'extrémité supérieure.

12. Dossier selon l'une des revendications 1 à 11, caractérisé en ce que la pièce transversale (7) s'étend dans la direction longitudinale des longerons latéraux (1, 2) au-delà du bord inférieur de l'entretoise (3), de préférence jusque dans la zone de la partie terminale inférieure des longerons latéraux (1, 2).

# Fig. 1

# Fig. 2

# Fig. 3

# Fig. 4

# Fig. 5

# Fig. 6